Europäisches Patentamt

European Patent Office

Office européen des brevets

(11) Numéro de publication: **0 369 277 A1**

## (12) DEMANDE DE BREVET EUROPEEN

(21) Numéro de dépôt: **89120483.6**

(22) Date de dépôt: **06.11.89**

(51) Int. Cl.⁵: **G02B 1/10**

(30) Priorité: **08.11.88 FR 8814568**

(43) Date de publication de la demande:
**23.05.90 Bulletin 90/21**

(84) Etats contractants désignés:
**DE FR GB**

(71) Demandeur: **ALCATEL N.V.**
**Strawinskylaan 341 (World Trade Center)**
**NL-1077 XX Amsterdam(NL)**

(72) Inventeur: **Mouchart, Jacques**
**34, avenue du Général Leclerc**
**F-94240 L'Hay les Roses(FR)**
Inventeur: **Begel, Jacqueline**
**142, Chemin Croix Rouge Fer Longpont sur Orge**
**F-91310 Montlhery(FR)**
Inventeur: **Chalot, Serge**
**6, rue du Zodiaque**
**F-91350 Grigny(FR)**

(74) Mandataire: **Weinmiller, Jürgen et al**
**Lennéstrasse 9 Postfach 24**
**D-8133 Feldafing(DE)**

(54) **Pièce optique à réflexion partielle et achromatique.**

(57) Un revêtement à reflexion partielle achromatique sans absorption est réalisé par dépôt, sur un support transparent (S), d'un empilement antireflet à large bande (A1), puis sur cet empilement d'une couche correctrice (C) du type quart d'onde dont l'indice de réfraction détermine la réflectance de la pièce optique ainsi réalisée.

L'invention s'applique notamment à la fabrication de lames semi-réfléchissantes.

EP 0 369 277 A1

FIG.1

## Pièce optique à réflexion partielle et achromatique

La présente invention concerne la réalisation d'un revêtement optique coopérant de manière achromatique avec un support transparent pour constituer une pièce optique partiellement réfléchissante. Cette pièce peut présenter par exemple la forme d'une lame. On entend par le mot achromatique le fait que le revêtement confère à la pièce optique une réflectance et une transmittance sensiblement constantes sur un intervalle étendu de longueurs d'onde, par exemple de l'ordre de une octave.

De tels revêtements sont couramment employés en optique dans certains composants optiques comme par exemple les séparateurs de faisceaux, qui utilisent généralement des lames semi-réfléchissantes pour lesquels R = T = 0,50, ou comme les filtres neutres.

L'achromatisation est souvent assez bonne quand le traitement effectué sur le support pour réaliser ledit revêtement est constitué par le dépôt d'une couche métallique. La réflectance dépend de l'épaisseur de métal déposée. Si de tels traitements sont bien adaptés à l'obtention de réflectances élevées, de l'ordre de 95 à 99%, ils le sont par contre beaucoup moins pour des faibles réflectances car ils présentent alors une absorption très importante et souvent rédhibitoire. En première approximation on constate les valeurs de transmittance T, de réflectance R et d'absorption A suivantes : (naturellement elles dépendent des matériaux employés que ce soient Ag, Au, Al, Cr, Ni, Pt, Rh...)

R = 99% T = 0% A = 1%
R = 30% T = 30% A = 40%
R = 10% T = 80% A = 10%

Il existe en particulier des applications pour lesquelles de tels traitements ne sont pas utilisables :
- avec les sources laser de grande puissance, l'absorption du dépôt est trop importante dans la couche métallique et détruit celle-ci,
- dans le cas où un faisceau lumineux utile est à la fois transmis et réfléchi par le revêtement, comme c'est le cas par exemple des lames semi-réfléchissantes (R = T) incorporées dans un appareil tel qu'un interféromètre. Avec une absorption de 40% le produit RT est égal à 9%. Avec un dépôt de même propriété R = T mais non absorbant (R = T = 50%) le produit RT monte alors à 25%, ce qui augmente la luminosité de l'appareil d'un facteur 2,8.

La seule manière connue d'éviter l'absorption dans un revêtement est de le constituer par des matériaux diélectriques (ou semi-conducteurs) transparents. Dans ces conditions le traitement est plus complexe car le revêtement doit présenter la forme d'un empilement de couches minces constituées de matériaux d'indices de réfraction différents et ayant des épaisseurs adéquates. De tels traitements trouvent leur application également comme lames semi-réfléchissantes de cavité associées à des lasers qui ont la possibilité d'émettre soit un spectre continu soit un certain nombre de longueurs d'onde distinctes étalées dans un large domaine spectral. La sélection en longueur d'onde d'effectue alors par un système dispersif comme par exemple un réseau, un prisme, un liquide à colorant etc... Dans ces conditions une seule lame semi-réfléchissante achromatique peut être suffisante pour explorer tout le domaine spectral et elle évite d'avoir recours a une lame semi-réfléchissante distincte pour chaque longueur d'onde sélectionnée.

Un tel empilement est pratiquement caractérisé par sa formule optique qui indique les indices et les épaisseurs des couches successives. Certaines de ces formules ont été proposées par la réalisation d'une pièce optique à réflection partielle et achromatique (documents 1 à 3) (de tels nombres entre parenthèses renvoient ici et ci-après à des documents cités à la fin de la présente description). Elles tiennent compte de nombreux paramètres qui caractérisent les cas particuliers d'application :
- l'indice du support,
- le domaine spectral d'achromatisme concerné (lumière ultraviolette, visible ou infrarouge),
- la réflectance R souhaitée.

Elles présente l'inconvénient de conduire fréquemment à des réalisations relativement coûteuses des pièces optiques à réflexion partielle parce que, dans beaucoup de cas, le mode de calcul de la formule optique et les opérations de dépôt des couches doivent être adaptées aux paramètres particuliers caractérisant ces cas.

Cette situation est différente de celle qui existe dans un domaine technique voisin qui est celui de la réalisation de pièces optiques à transmission sensiblement totale et achromatique pour lesquelles on cherche à éviter toute réflexion et toute absorption. Pour la réalisation de telles pièces on dépose sur un support transparent, un empilement de couches transparentes analogue à celui précédemment évoqué mais destiné à constituer un revêtement antireflet à large bande. De nombreuses formules optiques ont été déterminées pour cela (4 à 7) et, compte tenu du grand nombre de tels revêtements antireflet qui sont réalisés dans l'industrie, elles permettent de produire des pièces optiques à un coût relativement faible, alors même que les opérations de dépôt des couches minces sont réalisées avec le même type d'appareils, des matériaux de mêmes coûts et des épaisseurs de couche voisines de celles nécessaires pour réaliser des revêtements partiellement réfléchissants.

Les documents (8 à 10) concernent aussi le problème de l'achromatisation.

La présente invention a pour but de permettre la réalisation d'une pièce optique à réflexion partielle et achromatique à un coût relativement faible et/ou plus proche que précédemment de celui de la formation d'un revêtement antireflet à large bande.

Une pièce réalisée selon cette invention comporte, comme une pièce optique à réflexion partielle et achromatique connue,
- un support transparent ayant une face avant regardant vers un milieu ambiant ayant un indice de réfraction constituant un indice ambiant $n_o$ pour en recevoir une lumière incidente pouvant comporter des composantes chromatiques réparties dans une bande spectrale prédéterminée ayant une largeur, l'une de ces composantes constituant une composante de référence et présentant une longueur d'onde de référence,
- et un revêtement optique formé sur cette face avant, ce revêtement présentant la forme d'un empilement de réflexion partielle constitué d'une succession de N couches minces transparentes ayant des indices de réfraction différents et des épaisseurs selon une formule optique telle que la coopération de ce revêtement avec ce support confère à ladite pièce optique une réflectance de référence limitée (R) vis-à-vis de ladite composante de référence et des réflectances sensiblement égales à cette réflectance de référence vis-à-vis des autres dites composantes chromatiques, tout en évitant une absorption de lumière. Par rapport à cette pièce connue, la pièce selon l'invention est caractérisée par le fait que ledit empilement de réflexion partielle comporte lui même :
- un empilement antireflet à large bande formé de N-1 couches antireflet qui sont lesdites couches minces de l'empilement de réflexion partielle sauf une, lesdites couches antireflet ayant des indices de réfraction et des épaisseurs selon une formule optique adaptée audit support et telle que cet empilement antireflet empêcherait la réflexion de toutes lesdites composantes chromatiques si cet empilement antireflet était seul sur ce support,
- et une couche correctrice qui est celle desdites couches minces qui reste, cette couche correctrice ayant un indice de réfraction qui constitue un indice de correction n et qui vérifie l'égalité

$$R = \left\{ \frac{n_o{}^2 - n^2}{n_o{}^2 + n^2} \right\}^2$$

et cette couche correctrice ayant une épaisseur optique égale au quart de ladite longueur d'onde de référence.

De préférence ledit empilement antireflet est interposé entre ledit support et ladite couche correctrice. Typiquement ladite bande spectrale prédéterminée comporte des longueurs d'onde dans un rapport égal à deux environ et ladite longueur d'onde de référence est une longueur d'onde centrale dans cette bande. Ladite réflectance de référence est généralement comprise entre 0,1 et 0,9 et plus particulièrement entre 0,25 et 0,75.

On sait par ailleurs que la réflectance d'une pièce optique homogène peut être modifiée par adjonction d'une couche correctrice sur le support constitué par cette pièce homogène. On réalise ainsi une pièce optique à réflexion partielle comportant :
- un support transparent, ce support ayant une face avant pour recevoir une lumière incidente comportant une composante chromatique de référence et se propageant dans un milieu ambiant,
- et un revêtement optique formé sur cette face avant, ce revêtement comportant une couche correctrice transparente dont une épaisseur optique est égale au quart de la longueur d'onde de ladite composante de référence de manière à corriger une réflectance de ladite pièce optique vis-à-vis de ladite composante de référence pour rendre cette réflectance égale à une réflectance de référence. La réflectance d'une telle pièce à réflectance modifiée vaudrait

$$\left\{ \frac{n_o\, n_s - n^2}{n_o\, n_S + n^2} \right\}^2$$

$n_s$ étant l'indice de réfraction du support.

Par rapport à une telle pièce à réflectance modifiée, une pièce selon l'invention est caractérisée par le fait que ledit revêtement optique comporte en outre un empilement antireflet à large bande adapté audit support, cet empilement étant constitué de couches antireflet ayant des indices de réfraction différents et des épaisseurs selon une formule optique telle que, en l'absence de ladite couche correctrice, cet empilement empêcherait la réflexion de toutes les composantes chromatiques de ladite lumière incidente même lorsque ces composantes sont réparties dans une bande spectrale présentant une largeur, grâce à quoi cette pièce présente des réflectances sensiblement égales à ladite réflectance de référence vis-à-vis de toutes lesdites composantes chromatiques.

La réflectance de la pièce selon l'invention présente la valeur qui a été précédemment indiquée et qui diffère de celle de ladite pièce à réflectance modifiée.

A l'aide des figures schématiques ci-jointes, on va décrire plus particulièrement ci-après, à titre d'exemple non limitatif, comment la présente invention peut être mise en oeuvre dans le cadre de l'exposé qui en a été donné ci-dessus.

Lorsqu'un même élément est représenté sur plusieurs figures il y est désigné par le même signe de référence. Les modes de mise en oeuvre donnés en exemple comportent les dispositions parfois préférées mentionnées ci-dessus. Il doit être compris que les éléments mentionnés peuvent être remplacés par d'autres éléments assurant les mêmes fonctions techniques.

Les figures 1, 3, 5, 7 et 9 représentent des vues en coupe d'une première, d'une deuxième, d'une troisième, d'une quatrième et d'une cinquième pièces selon l'invention, respectivement.

Les figures 2A, 4A, 6A et 8A représentent, en fonction d'une longueur d'onde centrale de référence ramenée à la longueur d'onde unité et portée en abscisses, la variation de la réflectance des supports de ces mêmes pièces, respectivement, ces supports étant munis de leurs empilements antireflet seulement.

Les figures 2B, 4B, 6B et 8B représentent de même, et selon la valeur de l'indice de réfraction des couches correctrices de ces mêmes pièces, respectivement, la variation de la réflectance de ces pièces dont les couches correctrices sont superposées à leurs empilements antireflet.

Les figures 2C, 4C, 6C et 8C représentent de même la variation de la réflectance de pièces qui ont été modifiées dans le cadre de l'invention par rapport aux pièces précédentes selon l'invention, respectivement, ces pièces modifiées n'étant pas représentées et se différenciant des pièces précédentes par le fait que leurs couches correctrices sont interposées entre leurs supports et leurs empilements antireflet.

La figure 10 représente les variations de la réflectance R et de la transmittance T de la cinquième pièce réalisée selon l'invention en fonction de la longueur d'onde exprimée en micromètres.

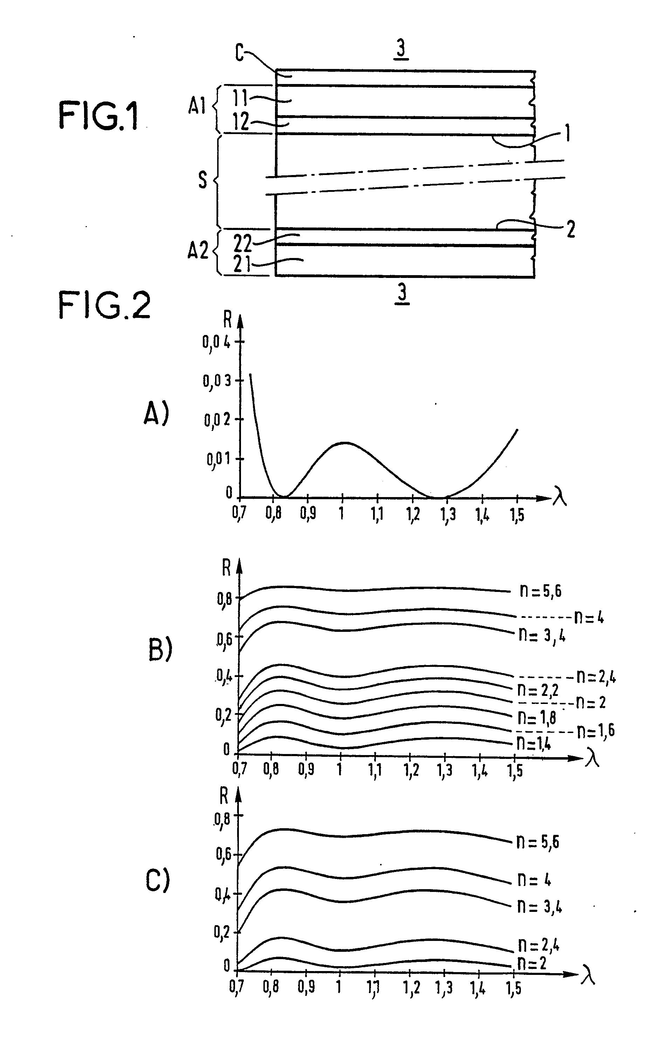

Il doit être compris que, dans le but d'illustrer les principes de l'invention, les figures 2B, 2C, 4B, 4C, 6B, 6C, 8B et 8C ont un caractère partiellement théorique de sorte qu'un point des courbes portées par ces figures peut ne pas correspondre à une pièce réalisable selon l'invention parce que, pour constituer ladite couche correctrice, on ne connaît pas de matériau qui présente l'indice de réfraction indiqué tout en étant transparent pour la longueur d'onde correspondant à ce point.

Les pièces optiques données en exemple sont plongées dans l'air de sorte que l'indice ambiant $n_0$ = 1, et leur support S présente un indice de réfraction constituant un indice de support $n_S$ = 1,5. Les couches sont dites quart d'onde ou demi onde quand leurs épaisseurs optiques valent le quart ou la moitié de la longueur d'onde de référence.

La première pièce selon l'invention représentée à la figure 1 comporte le support S en forme de lame avec deux faces parallèles avant 1 et arrière 2. Le milieu ambiant est représenté en 3.

Deux empilements antireflet identiques A1 et A2 sont déposés symétriquement sur ces faces avant et arrière. Une couche correctrice C est déposée sur l'empilement A1.

On réalise ainsi une pièce présentant une réflexion partielle achromatique sur sa face avant sans présenter de réflexion sur sa face arrière. Une telle pièce a l'avantage que les deux empilements antireflet peuvent être réalisés de la même manière.

L'empilement A1 comporte successivement à partir de la couche correctrice C et jusqu'au support S, une couche 11 quart d'onde avec un indice 1,38 et une couche 12 demi onde avec un indice 1,85.

Les autres pièces diffèrent de la première seulement par leurs empilements antireflet.

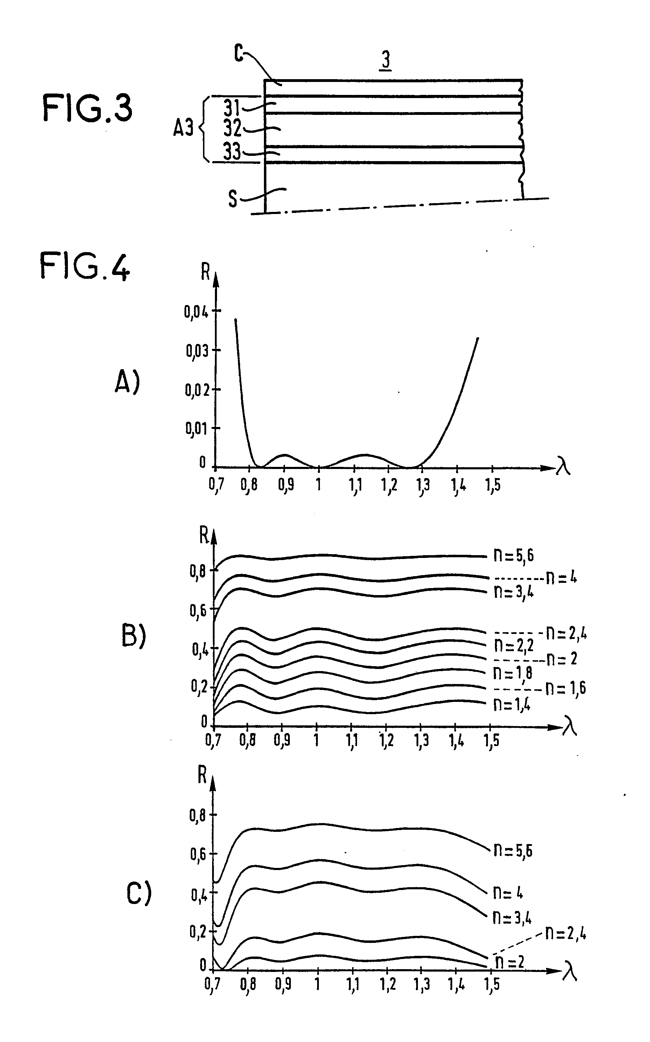

Conformément à la figure 3 l'empilement antireflet A3 de la deuxième pièce selon l'invention comporte une couche 31 quart d'onde d'indice 1,38, une couche 32 demi onde d'indice 2,1 et une couche 33 quart d'onde d'indice 1,70.

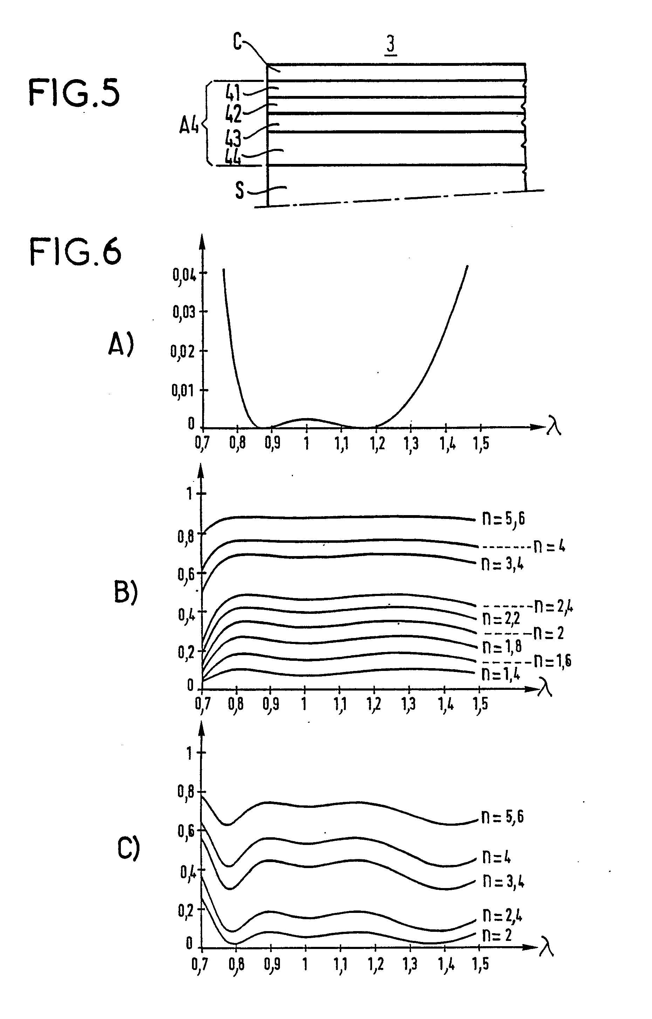

Conformément à la figure 5 l'empilement antireflet A4 de la troisième pièce selon l'invention comporte trois couches quart d'onde 41, 42 et 43 d'indices 1,45 - 2,2 et 1,95, respectivement, et une couche 44 demi onde d'indice 1,45.

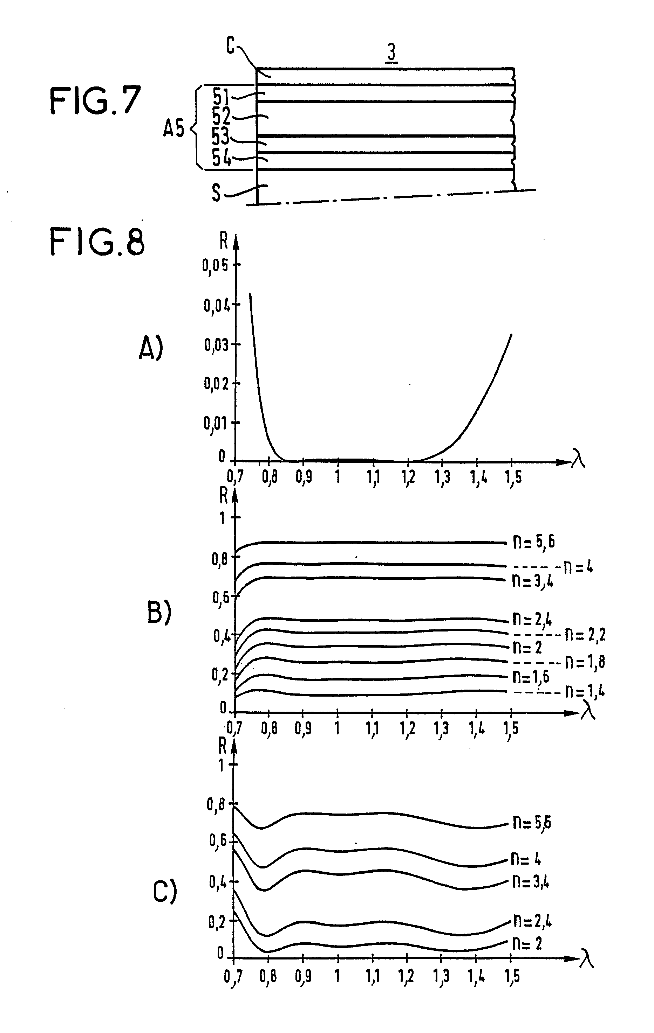

Conformément à la figure 7 l'empilement antireflet A5 de la quatrième pièce selon l'invention comporte une couche quart d'onde 51 d'indice 1,38, une couche demi onde 52 d'indice 2,2, et deux couches quart d'onde 53 d'indice 1,60 et 54 d'indice 1,45.

Les courbes des figures 2, 4 et 6 constituent des résultats de calcul et montrent ce qui suit : l'achromatisation est effective dans une bande spectrale plus large quand la couche correctrice C est placée du côté de l'air. Elle est d'autant meilleure que l'empilement antireflet est plus efficace : en première approximation, les extrema de l'empilement antireflet sont aussi des extrema du revêtement achromatique.

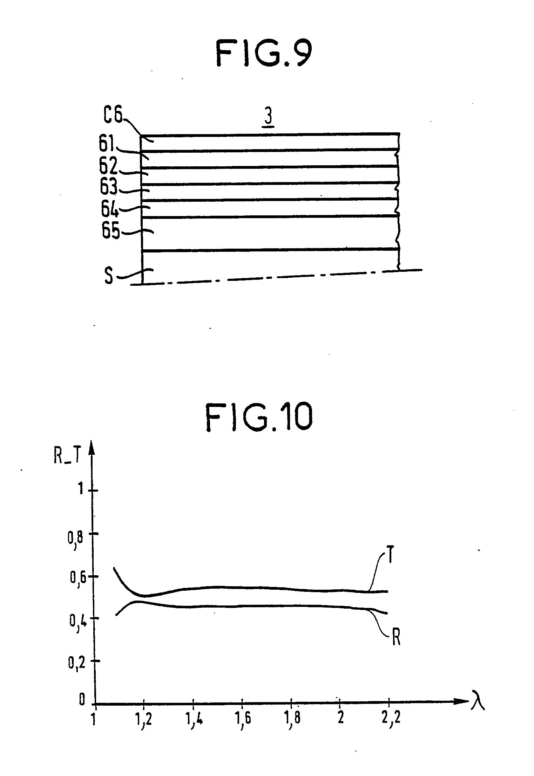

On a fabriqué une cinquième pièce selon l'intention sous la forme d'une lame semi-réfléchissante avec un support S en verre B1664 de la firme Corning-Sovirel d'indice 1,50 (voir fig.9). La succession des matériaux était la suivante : ZnSe-SiO₂-TiO₂-Substance 1 (de la firme Merck)-SiO₂ pour des couches C6, 61, 62, 63, 64 et 65 allant de l'air jusqu'au support S, respectivement : toutes les épaisseurs optiques étaient quart d'onde excepté pour la couche de SiO₂ 65 qui était placée sur le support et qui était demi onde. La couche C6 de seleniure de zinc ZnSe constituait la couche correctrice. La longueur d'onde de référence était 1,45 micromètre.

La figure 10 donne les valeurs de la transmittance T et de la réflectance R mesurées sur spectrophomètre. Les courbes sont effectivement achromatiques dans le domaine compris entre 1,1 et 2,2 micromètres. La réflectance est voisine de 0,45 (transmittance 0,55). On peut déceler l'existence d'une petite absorption du support pour les longueurs d'onde supérieures à 2 micromètres en comparant réflectance et transmittance.

En conclusion la présente invention permet de réaliser aisément des revêtements qui soient achromatiques dans une large bande spectrale. Selon l'invention on effectue pour cela un traitement antireflet à large bande sur lequel on dépose une couche correctrice unique dont l'indice fixe à lui seul la réflectance de l'ensemble de la pièce. Dans le cas où la réflectance souhaitée R ne correspond pas à un indice n de matériau d'indice connu, il est toujours possible d'utiliser une couche correctrice composite constituée par un système symétrique par exemple à 3 ou 5 couches comprenant deux matériaux distincts ou plus, de manière que cette couche composite équivale à une couche unique d'indice n et de déphasage de 90°. On peut se reporter pour cela aux articles de Herpin et Ohmer (réf 11 et 12). L'indice n et l'épaisseur quart d'onde sont alors des indice et épaisseur équivalents de la couche correctrice composite. Mais dans ces conditions, la largeur spectrale est réduite par rapport à celle qu'on obtiendrait si une couche unique étant employée. L'invention peut être employée dans un grand nombre de cas, exception faite des réflectances très élevées.

Elle permet, lorsqu'une achromatisation doit être associée à une valeur prédéterminée de la réflectance,
- de ramener l'étude de l'achromatisation à celle d'un empilement antireflet à large bande d'un type qui a été beaucoup étudié et pour lequel de nombreuses formules ont déjà été indiquées dans la littérature technique,
- de réaliser le revêtement par des étapes successives et facilement contrôlables. Et comme en général la face arrière du support doit être traitée antireflet, il n'y aura alors que ce seul traitement délicat à mettre au point qui servira aussi pour l'achromatisation. Ceci rend la fabrication de la pièce d'autant plus aisée.

Les documents cités dans la présente description sont les suivants :

(1) VASICEK, A., 1960, Optics of Thin Films, (Amsterdam : North Holland), p. 275,

(2) KNITTL,Z., 1976, Optics of Thin Films, (London : Wiley), p. 364,

(3) MIYAKE, P., 1964, Journal de Physique, p. 255,

(4) COX, T.J., and HASS, G., 1964, Physics of Thin Films, (New York Academic), Vol. 2, P.239,

(5) MUSSET, A., and THELEN, A., 1966, Progress in Optics, (Amsterdam North Holland), Vol. 8, p.201,

(6) DEBELL, G., 1983, Thin Film Technologies, SPIE Vol.401, p.127,

(7) MACLEOD, H.A., 1986, Thin Film Optical Filters, (New York Macmillan), p. 148,

(8) CLAPHAN, P.B., 1971, Optica Acta, P.563,

(9) MOUCHART, J., 1978, Applied Optics, P.72,

(10) MOUCHART, J., 1987, Journal of Modern Optics, P.1297.

(11) HERPIN, Ai, 1947, C. r. hebd. Séanc. Acad. Sci., Paris, 225, 182,

(12) OHMER, M., 1978, J.Opt. Soc. Am., 68, 137.

## Revendications

1/ Pièce optique à réflexion partielle et achromatique, cette pièce comportant :
- un support transparent (S) ayant un indice de réfraction qui constitue un indice de support ($n_S$), ce support présentant une face avant (1) regardant vers un milieu ambiant (3) ayant un indice de réfraction qui constitue un indice ambiant ($n_o$) pour que ce support reçoive de ce milieu ambiant et par cette face avant une lumière incidente pouvant comporter des composantes chromatiques réparties dans une bande spectrale prédéterminée présentant une largeur sensible, l'une de ces composantes constituant une composante de référence et présentant une longueur d'onde de référence,
- et un revêtement optique formé sur cette face avant, ce revêtement présentant la forme d'un empilement de réflexion partielle constitué d'une succession de N couches minces transparentes ayant des indices de réfraction différents et des épaisseurs selon une formule optique telle que la coopération de ce revêtement avec ce support confère à ladite pièce optique une réflectance de référence limitée (R) vis-à-vis de ladite composante de référence et des réflectances sensiblement égales à cette réflectance de référence vis-à-vis des autres dites composantes chromatiques, tout en évitant une absorption de lumière,

cette pièce étant caractérisée par le fait que ledit empilement de réflexion partielle comporte lui même :

- un empilement antireflet (A1) à large bande formé de N-1 couches couches antireflet (11, 12) qui sont lesdites couches minces de l'empilement de réflexion partielle sauf une, lesdites couches antireflet ayant des indices de réfraction et des épaisseurs selon une formule optique adaptée audit indice de support ($n_S$) et telle que cet empilement antireflet empêcherait la réflexion de chacune desdites composantes chromatiques si cet empilement antireflet était seul sur ledit support (S),

- et une couche correctrice (C) qui est celle desdites couches minces qui reste, cette couche correctrice ayant au moins par équiva lence un indice de réfraction qui constitue un indice de correction n et qui vérifie l'égalité

$$R = \left[ \frac{n_o^2 - n^2}{n_o^2 + n^2} \right]^2$$

et cette couche correctrice ayant au moins par équivalence une épaisseur optique égale au quart de ladite longueur d'onde de référence.

2/ Pièce selon la revendication 1, caractérisée par le fait que ledit empilement antireflet (A1) est interposé entre ledit support (S) et ladite couche correctrice (C).

3/ Pièce selon la revendication 1, dans laquelle ladite bande spectrale prédéterminée comporte des longueurs d'onde dans un rapport égal à deux environ et ladite longueur d'onde de référence est une longueur d'onde centrale dans cette bande.

4/ Pièce selon la revendication 1, dans laquelle ladite réflectance de référence (R) est comprise entre 0,1 et 0,9.

5/ Pièce selon la revendication 4, dans laquelle ladite réflectance de référence (R) est comprise entre 0,25 et 0,75.

6/ Pièce selon la revendication 2, dans laquelle ledit support (S) présente une face arrière (2) opposée à ladite face avant (1) pour la sortie de ladite lumière incidente dans ledit milieu ambiant (3), ledit empilement antireflet étant un empilement antireflet avant, cette pièce étant caractérisée par le fait que ladite face arrière (2) porte un revêtement optique (12) constitué par un empilement antireflet arrière identique audit empilement antireflet avant (A1), de manière que cette pièce présente une réflexion partielle achromatique sur sa face avant sans présenter de réflexion sur sa face arrière et que les deux dits empilements antireflet avant et arrière puissent être réalisés d'une même manière sur lesdites faces avant et arrière.

7/ Pièce optique à réflexion partielle comportant :

- un support (S) transparent, ce support ayant un indice de réfraction qui constitue un indice de support ($n_S$), ce support présentant une face avant (1) pour recevoir une lumière incidente qui comporte plusieurs composantes chromatiques dont une composante de référence et qui se propage dans un milieu ambiant (3),

- et un revêtement optique formé sur cette face avant, ce revêtement comportant une couche correctrice transparente (C) dont une épaisseur optique est égale au quart de la longueur d'onde de ladite composante de référence de manière à corriger une réflectance de ladite pièce optique vis-à-vis de cette composante de référence pour rendre cette réflectance égale à une réflectance de référence,

- cette pièce étant caractérisée par le fait que ledit revêtement optique comporte en outre un empilement antireflet à large bande (A1) adapté audit indice de support ($n_S$), cet empilement étant constitué de couches antireflet (11, 12) ayant des indices de réfraction différents et des épaisseurs selon une formule optique telle que, en l'absence de ladite couche correctrice (C), cet empilement empêcherait la réflexion de toutes lesdite composantes chromatiques de la lumière incidente même lorsque ces composantes sont réparties dans une bande spectrale présentant une largeur sensible, grâce à quoi cette pièce présente des réflectances sensiblement égales à ladite réflectance de référence (R) vis-à-vis de toutes ces composantes chromatiques.

8/ Pièce selon la revendication 7, dans laquelle ladite réflectance de référence vérifie l'égalité

$$R = \left[ \frac{n_o^2 - n^2}{n_o^2 + n^2} \right]^2$$

$n_o$ et n étant les indices de réfraction dudit milieu ambiant (3) et de ladite couche correctrice (C), respectivement.

FIG.1

FIG.2

FIG.3

FIG.4

A)

B)

C)

FIG.5

FIG.6

A)

B)

C)

FIG.7

FIG.8

A)

B)

C)

# FIG.9

C6
61
62
63
64
65
S

3

# FIG.10

R_T

1

0,8

0,6

0,4

0,2

0

T

R

1   1,2   1,4   1,6   1,8   2   2,2   λ

# RAPPORT DE RECHERCHE EUROPEENNE

Numero de la demande

EP 89 12 0483

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | JOURNAL DE PHYSIQUE, vol. 25, janvier-février 1964, pages 255-257; K.P. MIYAKE: "Computation of optical characteristics of dielectric mulilayers" * En entier * | 1,4,5,7 | G 02 B 1/10 |
| A | APPLIED OPTICS, vol. 18, no. 12, 15 juin 1979, pages 1966-1968; S.F. PELLICORI: "Beam splitter and reflection reducing coatings on ZnSe for 3-14 micrometer" * En entier * | 1,4,5,7 | |

DOMAINES TECHNIQUES
RECHERCHES (Int. Cl.5)

G 02 B 1/00

Le présent rapport a été établi pour toutes les revendications

| Lieu de la recherche | Date d'achèvement de la recherche | Examinateur |
|---|---|---|
| LA HAYE | 01-02-1990 | SARNEEL A.P.T. |